# DEMANDE DE BREVET EUROPEEN

(11) **EP 4 721 980 A1**
(43) Date de publication de la demande: **08.04.2026**
(21) Numéro de dépôt: 25206288.0
(22) Date de dépôt: 02.10.2025
(51) Int. Cl.: B33Y 80/00, H02K 3/12, H02K 9/22, H02K 15/35, H02K 3/24, H02K 15/0421, H02K 15/0643

(54) **BOBINAGE POUR STATOR DE MACHINE ÉLECTRIQUE TOURNANTE**

(30) Priorité: 04.10.2024 FR 2410733
(71) Demandeur: Moteurs Leroy-Somer, 16915 Angouleme (FR)
(72) Inventeur: BONET, Guylain, 16800 Soyaux (FR); MCCLELLAND, Michael, 16430 CHAMPNIERS (FR); COUPART, Eric, 16000 Angoulême (FR); BARBIER, Richard, 16440 ROULLET St ESTEPHE (FR)
(74) Mandataire: Ipsilon

(57) **Abrégé**

Bobinage (10) pour stator (1) de machine électrique tournante, comportant des jambes (12) de bobinage destinées à s'étendre dans des encoches du stator et une pluralité de têtes de bobine (13), une tête de bobine (13) reliant deux jambes (12) de bobinage,
le bobinage comportant une ou plusieurs ailettes de refroidissement (20) sur au moins une tête de bobine (13) de la pluralité de têtes de bobine et/ou du côté du stator opposé aux têtes de bobine (13).

## Description

### Domaine technique

La présente invention concerne les machines électriques tournantes et plus particulièrement les stators de telles machines. L'invention porte plus particulièrement sur un bobinage pour de tels stators, ainsi que sur un conducteur électrique destiné à être inséré dans des encoches d'un tel stator. L'invention concerne également le stator et la machine électrique tournante correspondante. Elle concerne encore le procédé de fabrication de tels bobinages ou conducteurs électriques.

L'invention porte plus particulièrement sur les machines synchrones ou asynchrones, à courant alternatif. Elle concerne notamment les machines de traction ou de propulsion d'engin volant, et pour la production d'énergie, notamment dans le domaine aéronautique.

### Technique antérieure

On connait par les demandes WO 2019/233786, WO 2023/242164 et WO 2023/006612 un stator dans lequel les conducteurs électriques s'étendant dans les encoches du stator sont reliés par des ponts conducteurs fabriqués au moins en partie par fabrication additive.

Dans les demandes US 2022/0263392 et WO 2022/029008, l'assemblage de bobinage est réalisé par fabrication additive. Dans les demandes WO 2022/248659 et WO 2023/242164, des canaux de refroidissement sont ménagés en association avec des conducteurs électriques.

La demande DE 102023108423 a pour objet une pièce de connexion des conducteurs électriques s'étendant dans les encoches du stator.

Il existe un besoin pour améliorer encore le refroidissement des conducteurs électriques, notamment lorsque ceux-ci sont fabriqués au moins en partie par fabrication additive. Il existe notamment un besoin pour bénéficier d'un stator de machine électrique tournante d'assemblage aisé permettant un remplissage efficace des encoches, tout en assurant des performances électromagnétiques satisfaisantes.

Il existe encore un besoin pour réduire le coût de fabrication des machines électriques, notamment en simplifiant la fabrication du bobinage du stator, par exemple en minimisant le nombre de pièces à utiliser.

Il existe également un besoin pour améliorer encore les stators de machines électriques et notamment diminuer les ondulations de couple et les pertes Joule AC par courants induits, les vibrations et le bruit électromagnétique, et d'améliorer leur fiabilité.

Il existe également un besoin pour disposer d'un procédé de fabrication de conducteurs électriques permettant la formation de conducteurs électriques avec un taux de remplissage des encoches satisfaisant, permettant une fabrication rapide des conducteurs électriques, limitant la quantité de conducteurs électriques utilisée et capables d'être refroidies efficacement.

### Exposé de l'invention

L'invention vise à répondre à tout ou partie de ces besoins, et elle y parvient, selon un premier aspect, grâce à un bobinage pour stator de machine électrique tournante, comportant des jambes de bobinage destinées à s'étendre dans des encoches du stator et une pluralité de têtes de bobine, une tête de bobine reliant deux jambes de bobinage,
le bobinage comportant une ou plusieurs ailettes de refroidissement sur au moins une tête de bobine de la pluralité de têtes de bobine et/ou du côté du stator opposé aux têtes de bobine.

La présence des ailettes de refroidissement permet d'améliorer le refroidissement du bobinage et notamment de mieux évacuer la chaleur produite dans le bobinage, notamment dans les têtes de bobine et dans les jambes de celui-ci.

La présence des ailettes de refroidissement permet d'augmenter la surface d'échange entre les têtes de bobine et un circuit de refroidissement.

En outre, il est avantageux d'augmenter le remplissage en matériau conducteur dans les têtes de bobine plutôt que de laisser de l'espace pour une résine d'enrobage qui a une conductivité thermique bien inférieure au cuivre ou autre matériau conducteur.

Ainsi, on peut réduire la différence de température entre le cœur des têtes de bobine et la partie externe de celles-ci qui est en contact avec le circuit de refroidissement.

La ou les ailettes peuvent être d'un seul tenant avec le reste du bobinage, par exemple de la tête de bobine ou de la jambe de bobinage. Elles peuvent ne pas être rapportées sur le bobinage.

Les jambes du bobinage peuvent être rectilignes. Elles peuvent être prolongés de part et d'autre hors des encoches par une partie oblique.

L'invention a notamment pour objet une machine de traction ou de propulsion comportant un stator comportant un bobinage pour stator de machine électrique tournante, le bobinage comportant une pluralité de conducteurs électriques, chaque conducteur électrique étant en forme d'épingle en I ou en U,
chaque conducteur électrique en forme d'épingle en U comportant des jambes de bobinage destinées à s'étendre dans des encoches du stator et une pluralité de têtes de bobine, une tête de bobine reliant deux jambes de bobinage,
le bobinage comportant une ou plusieurs ailettes de refroidissement sur au moins une tête de bobine de la pluralité de têtes de bobine et/ou du côté du stator opposé aux têtes de bobine, les ailettes de refroidissement étant fabriquées par fabrication additive,
le stator comportant une coque de refroidissement de forme générale circulaire et au moins une portion de circulation d'un fluide de refroidissement s'étendant circonférentiellement, ménagée par deux parois s'étendant circonférentiellement.

### Résumé de l'invention

### Ailettes de refroidissement

Au moins une tête de bobine de la pluralité de têtes de bobine peut comporter une ou plusieurs ailettes de refroidissement. Le bobinage peut comporter en outre une ou des ailettes de refroidissement du côté du stator opposé au têtes de bobine.

Les ailettes, voire les têtes de bobines, voire le bobinage en entier, peuvent être fabriqués par fabrication additive. Cela permet d'éliminer les connexions électriques dans le bobinage, ce qui est avantageux car celles-ci peuvent donner lieu à des points chauds et donc à des points de défaillances, ce qui peut avoir pour conséquence une dégradation de la fiabilité.

Les ailettes, voire les têtes de bobines, voire le bobinage en entier, peuvent être réalisés dans un matériau électriquement conducteur. Les ailettes, voire les têtes de bobines, voire le bobinage en entier, peuvent être réalisés dans un matériau thermiquement conducteur. La conductibilité thermique des ailettes permet de conduire vers celles-ci la chaleur produite dans le bobinage, et ainsi de l'évacuer plus facilement. Les ailettes, voire les têtes de bobines, voire le bobinage en entier, peuvent notamment être réalisés en cuivre.

Au moins une ailette, voire toutes les ailettes, peuvent être configurée pour ne pas être traversées par un courant électrique lorsqu'un courant électrique circule dans le bobinage. Aucun courant électrique ne circulant dans les ailettes de refroidissement, on évite d'augmenter les pertes dans celles-ci.

A cet effet, les ailettes de refroidissement peuvent avoir une forme générale avec plusieurs côtés, par exemple sensiblement rectangulaire avec quatre côtés, dont un côté seulement est relié au reste du bobinage, et avec les autres côtés non reliés électriquement.

Ainsi, les ailettes sont conçues de manière à ne pas acheminer de courant électrique. Elles permettent ainsi d'assurer un faible niveau de pertes AC, c'est-à-dire les pertes associées avec l'effet de peau pour les fréquences plus élevées.

Une telle disposition du bobinage et des ailettes de refroidissement isolées électriquement peut permettre d'éviter les décharges partielles entre les conducteurs des phases différentes et entre les conducteurs et la masse, ce qui est avantageux.

La ou les ailettes de refroidissement peuvent s'étendre selon une surface circonférentielle.

Au moins une ailette de refroidissement peut être disposée du côté du stator opposé au têtes de bobine. Au moins une ailette disposée du côté du stator opposé au têtes de bobine peut avoir notamment une forme aplatie, s'étendant notamment selon une surface d'aplatissement. La surface d'aplatissement peut être circonférentielle.

Dans un mode de réalisation, lorsque l'on se déplace circonférentiellement, une jambe sur deux du bobinage peut comporter une telle ailette de refroidissement. Ladite ailette de refroidissement peut s'étendre circonférentiellement en superposition sur la jambe à laquelle elle est reliée, et sur une jambe adjacente. Lesdites ailettes peuvent être situées du coté extérieur du stator, à l'opposé de l'alésage central.

En variante ou additionnellement, le bobinage peut comporter une pluralité d'ailettes de refroidissement disposées chacune dans le prolongement d'une jambe du bobinage, et ne venant en superposition que de ladite jambe, notamment sans dépasser au-dessus d'une jambe adjacente.

En variante ou additionnellement, le bobinage peut encore comporter une pluralité d'ailettes de refroidissement disposées chacune dans le prolongement de plusieurs jambes du bobinage, du côté d'un alésage central du stator.

Le bobinage peut encore comporter, du côté du stator opposé au têtes de bobine, une ailette de refroidissement disposée à l'intersection d'une jambe et d'une ailette de refroidissement disposée dans le prolongement d'une jambe du bobinage, ladite ailette formant notamment une surépaisseur de la jambe au niveau de la connexion entre la jambe et l'ailette disposée dans le prolongement. L'ailette de refroidissement peut ainsi prendre la forme d'une surépaisseur de la jambe au niveau de la connexion entre la jambe et l'ailette disposée dans le prolongement.

Cette ailette de refroidissement permet d'occuper l'espace disponible par le matériau du bobinage, notamment du cuivre, plutôt que par du matériau d'imprégnation ou d'isolation, notamment une résine, ce qui permet de mieux évacuer la chaleur produite dans le bobinage. Elle peut former un pont thermique.

Dans un mode de réalisation, le bobinage peut comporter, du côté du stator opposé au têtes de bobine, des ailettes de refroidissement s'étendant parallèlement les uns aux autres, avec lorsque l'on se déplace radialement, d'abord du côté de l'alésage central une ailette de refroidissement disposée dans le prolongement de plusieurs jambes, puis au milieu une ailette de refroidissement disposée dans le prolongement d'une jambe du bobinage, puis enfin du côté opposé à l'alésage central, une ailette de refroidissement s'étendant circonférentiellement en superposition sur la jambe à laquelle elle est reliée, et sur une jambe adjacente.

Au moins une ailette peut être disposée sur le sommet d'une tête de bobine. Au moins une ailette disposée sur le sommet d'une tête de bobine peut avoir notamment une forme aplatie, s'étendant notamment selon une surface d'aplatissement. La surface d'aplatissement peut être circonférentielle.

Au moins une tête de bobine, voire une majorité de têtes de bobines, mieux chaque tête de bobine, peut comporter au moins une ailette de refroidissement, voire deux ailettes de refroidissement, mieux trois ailettes de refroidissement. Les ailettes de refroidissement d'une même tête de bobine peuvent s'étendre parallèlement les unes aux autres. Elles peuvent s'étendre selon des plans d'aplatissement qui sont parallèles les uns aux autres.

Le bobinage peut comporter une ailette de refroidissement disposée à l'intersection d'une jambe et d'une tête de bobine, notamment une surépaisseur de la jambe au niveau de la connexion entre la jambe et la tête de bobine. L'ailette de refroidissement peut prendre la forme d'une surépaisseur de la jambe au niveau de la connexion entre la jambe et la tête de bobine.

Cette ailette de refroidissement permet d'occuper l'espace disponible par le matériau du bobinage, notamment du cuivre, plutôt que par du matériau d'imprégnation ou d'isolation, notamment une résine, ce qui permet de mieux évacuer la chaleur produite dans le bobinage. Elle peut former un pont thermique.

En variante encore, indépendamment ou en combinaison avec ce qui précède, le bobinage peut comporter une ou plusieurs ailettes sur une portion oblique disposée dans la continuité d'une jambe de bobinage, notamment du côté des têtes de bobines ou du côté opposé aux têtes de bobine. Une ailette peut avoir une forme de pavé. En variante ou additionnellement, une ailette peut avoir une forme trapézoïdale.

Dans un mode de réalisation, le bobinage comporte plusieurs couches de jambes de bobinage, notamment 2, 4 ou 6, ou autre. Par 'nombre de couches' on entend le nombre de conducteurs électriques dans une encoche du stator, se succédant radialement, dans lesquels circule un courant dans un sens différent ou d'une phase différente. Le refroidissement des couches, en particulier des couches centrales, est amélioré par la présence des ailettes de refroidissement.

### Conducteur électrique

Le bobinage peut comporter une pluralité de conducteurs électriques, chaque conducteur électrique étant en forme d'épingle en I ou en U. Chaque conducteur électrique en forme d'épingle en U peut comporter des première et seconde jambes destinées à s'étendre axialement respectivement dans des première A et seconde R encoches du stator. Les premières et secondes jambes peuvent être rectilignes.

Une tête de bobine peut comporter une portion de chignon reliée aux première et seconde jambes du conducteur électrique chacune par une portion oblique. Les portions obliques peuvent être par exemple rectiligne.

Les conducteurs électriques peuvent être reliés entre eux pour former le bobinage, par exemple par fabrication additive. Cela permet d'éliminer les connexions entre les différents conducteurs électriques, ce qui est avantageux car celles-ci peuvent donner lieu à des points chauds et donc à des points de défaillances, ce qui peut avoir pour conséquence une dégradation de la fiabilité.

L'invention a notamment pour objet un conducteur électrique pour stator de machine électrique tournante, comportant des première et seconde jambes destinées à s'étendre dans des encoches du stator et une tête de bobine reliant les première et seconde jambes,
le conducteur électrique comportant une ou plusieurs ailettes de refroidissement sur la tête de bobine et/ou du côté du stator opposé à la tête de bobine.

Les ailettes de refroidissement peuvent être telles que décrites ci-dessus.

Des conducteurs électriques, voire une majorité des conducteurs électriques, s'étendent axialement dans les encoches. Les conducteurs électriques peuvent être introduits dans les encoches correspondantes par l'une ou les deux extrémités axiales de la machine, ou par un alésage central du stator.

Un conducteur électrique en forme de I a deux extrémités axiales chacune placées à l'une des extrémités axiales du stator. Il passe dans une encoche unique, et peut être relié ou soudé à chacune de ses extrémités axiales à deux autres conducteurs électriques, au niveau des extrémités axiales du stator. Le stator peut par exemple comporter 6, 10, 12, 14, 18, 22 ou 26 conducteurs électriques en forme de I, les autres conducteurs électriques pouvant tous être en forme de U. En variante, le stator peut être dépourvu de conducteur électrique en forme de I.

Un conducteur électrique en forme de U a deux extrémités axiales toutes deux placées à l'une des extrémités axiales du stator. Ces deux extrémités axiales sont définies par les deux jambes du U. Il passe dans deux encoches différentes, et peut être relié ou soudé à chacune de ses extrémités axiales à deux autres conducteurs électriques, au niveau d'un même côté axial du stator. Le bas du U, c'est-à-dire le côté du U formant la tête de bobine, est disposé de l'autre côté axial du stator.

Au moins une partie des conducteurs électriques, voire une majorité des conducteurs électriques, peuvent être en forme d'épingle en U.

Les conducteurs électriques peuvent être réalisés en cuivre ou aluminium, ou tout autre matériau conducteur émaillé ou revêtu de tout autre revêtement isolant adapté.

### Stator

L'invention a encore pour objet, selon un autre de ses aspects, indépendamment ou en combinaison avec ce qui précède, un stator comportant une masse statorique comportant des encoches, et un bobinage logé dans la masse statorique. Le bobinage peut être tel que défini plus haut. Il peut comporter une pluralité de conducteurs électriques logés dans les encoches, au moins une partie des conducteurs électriques, voire une majorité des conducteurs électriques, mieux tous les conducteurs électriques, pouvant être tels que définis plus haut.

L'invention a ainsi pour objet un stator de machine électrique tournante, comportant un bobinage ou un ou plusieurs conducteurs électriques tels que décrits ci-dessus. Les ailettes de refroidissement peuvent être telles que décrites ci-dessus.

La masse statorique comporte des dents définissant entre elles les encoches, les dents étant rattachée à une culasse du stator.

Les première et seconde encoches peuvent être non consécutives. On peut parler respectivement d'encoche aller et d'encoche retour. Les première A et seconde R encoches peuvent être séparées par un nombre d'encoches compris entre 3 et 20, mieux entre 6 et 16, étant par exemple de 7, 8, 9, 10 ou 11 encoches.

Le stator peut comporter deux, quatre ou six conducteurs électriques par encoche. Les conducteurs électriques peuvent former un bobinage distribué. Le bobinage peut être ondulé ou imbriqué.

La masse statorique peut être réalisée par empilement de tôles. Les dents peuvent être reliées entre elles par une culasse. Les encoches peuvent être ouvertes ou fermées. Elles peuvent être réalisées entièrement par découpage dans les tôles. Chaque tôle de l'empilement de tôles peut être monobloc. Chaque tôle est par exemple découpée dans une feuille d'acier magnétique ou contenant de l'acier magnétique, par exemple de l'acier de 0,1 à 1,5 mm d'épaisseur. Les tôles peuvent être revêtues d'un vernis isolant électrique sur leurs faces opposées avant leur assemblage au sein de l'empilement. L'isolation électrique peut encore être obtenue par un traitement thermique des tôles, le cas échéant.

En variante, la masse statorique peut être fabriquée par fabrication additive, notamment à partir d'une poudre magnétique.

La machine électrique tournante peut comporter un rotor.

### Coque de refroidissement

L'invention a encore pour objet, selon un autre de ses aspects, indépendamment ou en combinaison avec ce qui précède, une coque de refroidissement pour un stator de machine électrique tournante tel que défini ci-dessus.

L'invention a notamment pour objet une coque de refroidissement pour un stator de machine électrique tournante, notamment tel que défini ci-dessus, comportant une forme générale circulaire et au moins une portion de circulation d'un fluide de refroidissement s'étendant circonférentiellement, ménagée par deux parois s'étendant circonférentiellement.

Par « s'étendre circonférentiellement », on entend s'étendre sensiblement selon une surface ayant une forme générale de cylindre ou de cône. Un axe du cylindre ou du cône peut être un axe de rotation de la machine.

La coque de refroidissement est destinée à être disposée sur le bobinage du côté des têtes de bobines.

La coque de refroidissement peut être configurée pour épouser la partie extérieure des têtes de bobine tout en minimisant l'épaisseur de ses parois afin de réduire la différence de température entre le cuivre et le circuit de refroidissement, comme un liquide de refroidissement par exemple. La matière et l'épaisseur des parois de la coque peuvent être choisies de manière à assurer une fonction d'isolation électrique et éviter les décharges partielles. La ou les portions de circulation peuvent épouser les ailettes de manière à mieux refroidir la partie intérieure des têtes de bobine. La présence des portions de circulation permet de mieux refroidir l'intérieur du bobinage.

La coque de refroidissement peut comporter une, deux ou plus portions de circulation de fluide de refroidissement s'étendant circonférentiellement, chacune ménagée par deux parois s'étendant circonférentiellement.

Les portions de circulation peuvent être reliées entre elle, la coque ayant une forme de spirale, notamment en multi-étages.

La coque de refroidissement peut comporter une jupe extérieure, la jupe extérieure s'étendant sensiblement cylindriquement. La coque de refroidissement peut comporter une jupe intérieure, la jupe intérieure s'étendant sensiblement cylindriquement. La jupe extérieure et la jupe intérieure peuvent être concentriques. La ou les portions de circulation peuvent s'étendre entre la jupe intérieure et la jupe extérieure.

Dans un mode de réalisation, la coque de refroidissement peut comporter une jupe extérieure et une jupe intérieure, qui sont notamment concentriques, et une ou des portions de circulation d'un fluide de refroidissement s'étendant circonférentiellement, ménagées chacune par deux parois s'étendant circonférentiellement, la ou les portions de circulation s'étendant entre la jupe intérieure et la jupe extérieure.

Les parois des portions de circulation peuvent venir épouser les ailettes du bobinage, ce qui permet d'améliorer le refroidissement.

Par exemple dans le cas où le bobinage comporte quatre couches, la coque de refroidissement peut comporter deux portions de circulation. Une telle configuration permet de bien refroidir les deux couches centrales. Les deux portions de circulations peuvent être disposées respectivement entre deux rangées circonférentielles d'ailettes, lesdites rangées circonférentielles étant concentriques et consécutives.

Deux parois définissant une portion de circulation peuvent avoir une distance entre elles, notamment comprise entre 1 et 10 mm, voire entre 2 et 8 mm, mieux entre 2 et 5 mm, étant par exemple de l'ordre de 3 mm.

La ou les portions de circulation sont destinées à venir se placer entre des ailettes de refroidissement, lorsque la coque de de refroidissement est mise en place sur le stator avec le bobinage. La coque de refroidissement épouse alors la forme des têtes de bobines. Le stator peut par exemple comporter trois ailettes parallèles et deux portions de circulation intercalaires.

La coque de refroidissement peut assurer trois fonctions. Elle permet d'isoler électriquement les têtes de bobines du fluide de refroidissement caloporteur tout en assurant un bon transfert thermique entre les eux. Enfin, elle permet de conférer au fluide de refroidissement une vitesse de circulation suffisante tout autour des têtes de bobines afin d'assurer un bon coefficient d'échange thermique tout en limitant les pertes de charges, les pertes de recirculation et le sur-échauffement du fluide têtes de bobines.

Le fluide de refroidissement peut notamment être liquide, étant par exemple de l'huile ou de l'eau.

### Machine électrique tournante

L'invention a encore pour objet, selon un autre de ses aspects, indépendamment ou en combinaison avec ce qui précède, une machine électrique tournante comportant un stator tel que défini ci-dessus, et notamment un rotor.

### Procédé de fabrication

L'invention a également pour objet, selon un autre de ses aspects, indépendamment ou en combinaison avec ce qui précède, un procédé de fabrication d'un bobinage ou d'un conducteur électrique pour stator de machine électrique tournante tels que définis plus haut.

L'invention a notamment pour objet, selon un autre de ses aspects, indépendamment ou en combinaison avec ce qui précède, un procédé de fabrication d'un bobinage ou d'un conducteur électrique pour stator de machine électrique tournante, comportant les étapes suivantes :
(a) fournir des conducteurs électriques, notamment fabriqués par fabrication additive, notamment en forme d'épingle en I ou en U,
(b) déposer, notamment par fabrication additive, sur lesdits conducteurs électriques, une pluralité de têtes de bobine reliant les conducteurs électriques,
en formant, notamment par fabrication additive, une ou plusieurs ailettes de refroidissement sur au moins une tête de bobine et/ou du côté du stator opposé aux têtes de bobine.

Les ailettes de refroidissement peuvent être telles que décrites ci-dessus.

### Engin volant

L'invention a encore pour objet, indépendamment ou en combinaison avec ce qui précède, un engin volant comportant une machine électrique tournante telle que décrite ci-dessus, pour application extraterrestre, notamment aéronautique. L'engin volant peut être choisi dans la liste suivante, qui n'est pas limitative : avion, drone, dirigeable, aéronef stratosphérique, hélicoptère.

### Brève description des dessins

L'invention pourra être mieux comprise à la lecture de la description détaillée qui va suivre, d'un exemple de réalisation non limitatif de celle-ci, et à l'examen du dessin annexé, sur lequel :
[Fig 1] La figure 1 est une vue en perspective, schématique et partielle, d'un stator conforme à l'invention.
[Fig 2] La figure 2 est une vue en coupe longitudinale du bobinage et de la coque de refroidissement du stator de la figure 1.
[Fig 3] La figure 3 illustre une vue en perspective, schématique et partielle, du bobinage avec des ailettes de refroidissement.
[Fig 4] La figure 4 est une vue en perspective, schématique et partielle, d'une partie du bobinage avec des têtes de bobine et des ailettes de refroidissement.
[Fig 5] La figure 5 présente une vue isolée en perspective, schématique et partielle, d'un conducteur électrique en forme de U avec des ailettes de refroidissement.
[Fig 6] La figure 6 montre une vue en perspective, schématique et partielle, d'une partie du bobinage avec des conducteurs électriques et des ailettes de refroidissement.
[Fig 7] La figure 7 est une vue en perspective, schématique et partielle, d'une partie du bobinage du côté opposé aux têtes de bobine.
[Fig 8] La figure 8 est une vue en perspective, schématique et partielle, d'une partie du bobinage du côté opposé aux têtes de bobine d'une variante de réalisation.
[Fig 9] La figure 9 est une vue en perspective, schématique et partielle, d'une partie du bobinage du côté opposé aux têtes de bobine d'une variante de réalisation.
[Fig 10] La figure 10 est une vue en perspective, schématique et partielle, de la coque de refroidissement isolée.
[Fig 11] La figure 11 est une vue en perspective et en éclatée, schématique et partielle, du stator et des coques de refroidissement.

### Description détaillée

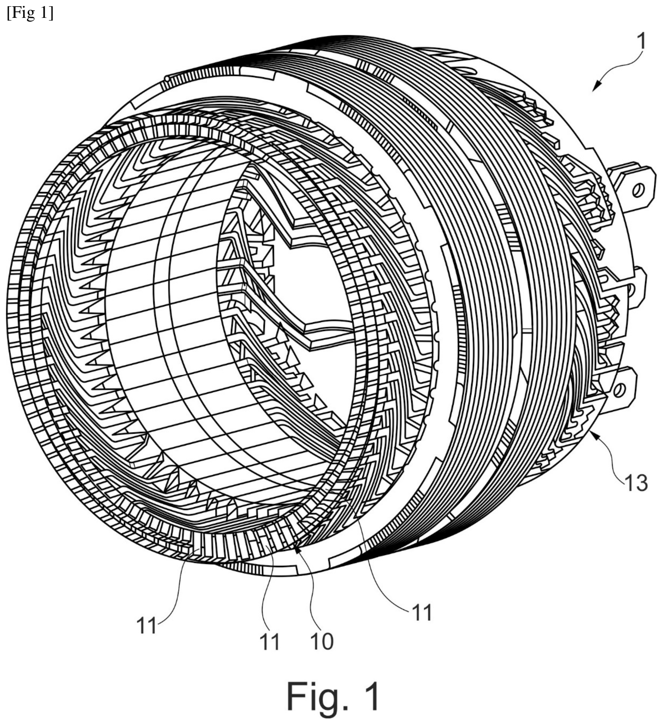

On a illustré aux figures 1 à 7 un stator 1 de machine électrique tournante comportant un stator et un rotor. Le stator comporte une masse statorique comportant des encoches et des dents définissant entre elles les encoches, les dents étant rattachée à une culasse.

Le stator 1 comporte un bobinage 10 comportant des conducteurs électriques 11 logés dans les encoches et une coque de refroidissement 30. Dans l'exemple décrit, le stator comporte quatre conducteurs électriques par encoche.

Les conducteurs électriques sont en section transversale de forme générale rectangulaire. Ils sont dans l'exemple décrit superposés radialement en une seule rangée. La dimension circonférentielle d'un conducteur électrique correspond sensiblement à la largeur d'une encoche.

Les conducteurs électriques 11 sont en cuivre ou aluminium, ou tout autre matériau conducteur émaillé ou revêtu de tout autre revêtement isolant adapté.

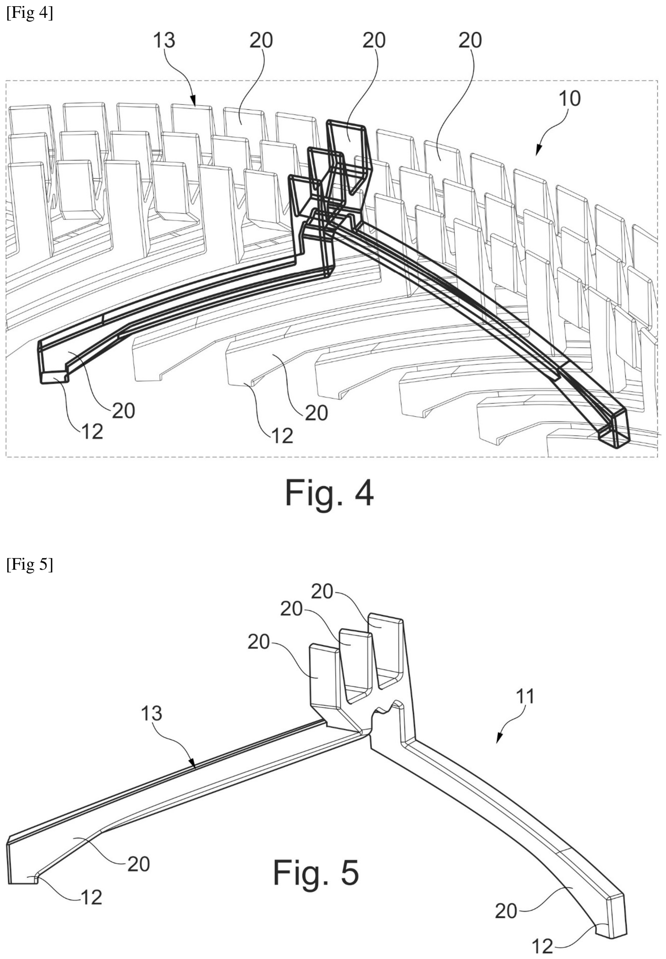

Les conducteurs électriques sont en forme d'épingle en U, comme visible sur la figure 5. Ils comportent chacun des première et seconde jambes de bobinage 12 destinées à s'étendre axialement respectivement dans des première A et seconde R encoches du stator. Les jambes du bobinage 12 sont rectilignes.

Le bobinage 10 comporte aussi une pluralité de têtes de bobine 13. Une tête de bobine 13 relie deux jambes de bobinage 12.

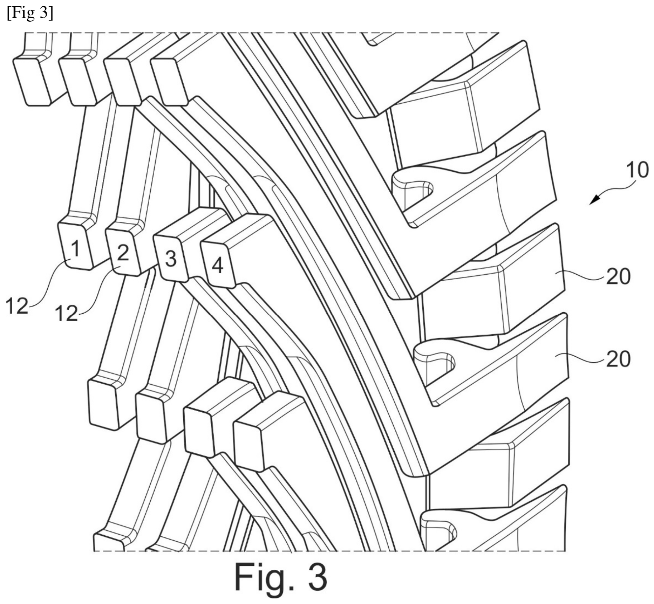

Le bobinage 10 comporte plusieurs ailettes de refroidissement 20. Celles-ci sont situées d'une part sur les têtes de bobine 13 et d'autre part du côté du stator opposé aux têtes de bobine 13, comme illustré sur les figures 3 à 7.

Les ailettes de refroidissement 20 et les têtes de bobines 13 peuvent être fabriquées par fabrication additive. Des ailettes de refroidissement 20 ont une forme générale sensiblement rectangulaire, avec quatre côtés, dont l'un est relié au reste du bobinage 10, et trois côtés non reliés électriquement.

Des ailettes 20 sont disposées sur le sommet d'une tête de bobine 13, comme illustré sur les figures 3 =à 5. Elles ont une forme aplatie, s'étendant selon une surface d'aplatissement circonférentielle. Dans l'exemple décrit, chaque tête de bobine 13 comporte trois ailettes de refroidissement 20. Les ailettes de refroidissement 20 d'une même tête de bobine 13 s'étendent parallèlement les unes aux autres, selon des plans d'aplatissement qui sont parallèles les uns aux autres.

Le bobinage 10 comporte également des ailettes de refroidissement 20 disposées à l'intersection d'une jambe 12 et d'une tête de bobine 13, comme illustré sur la figure 4. Cette ailette de refroidissement 20 prend la forme d'une surépaisseur de la jambe 12 au niveau de la connexion entre la jambe 12 et la tête de bobine 13. Cette ailette de refroidissement 20 permet d'occuper l'espace disponible par le matériau du bobinage 10, notamment du cuivre, plutôt que par du matériau d'imprégnation ou d'isolation, notamment une résine.

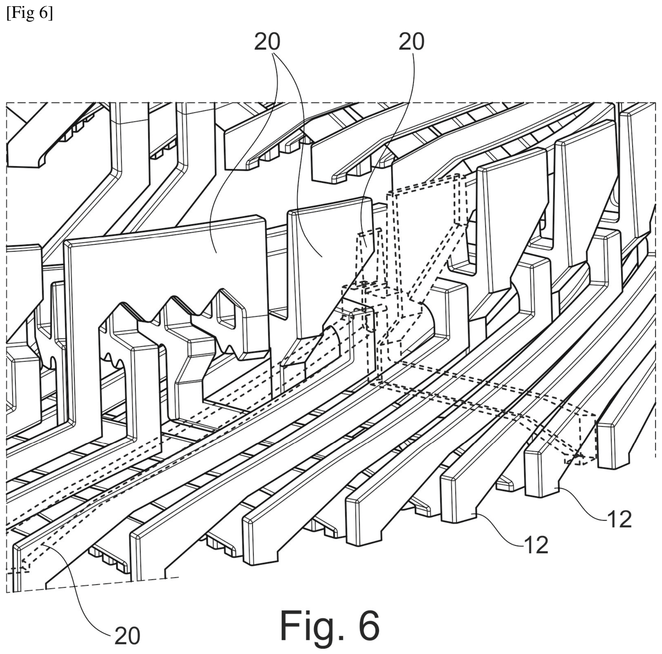

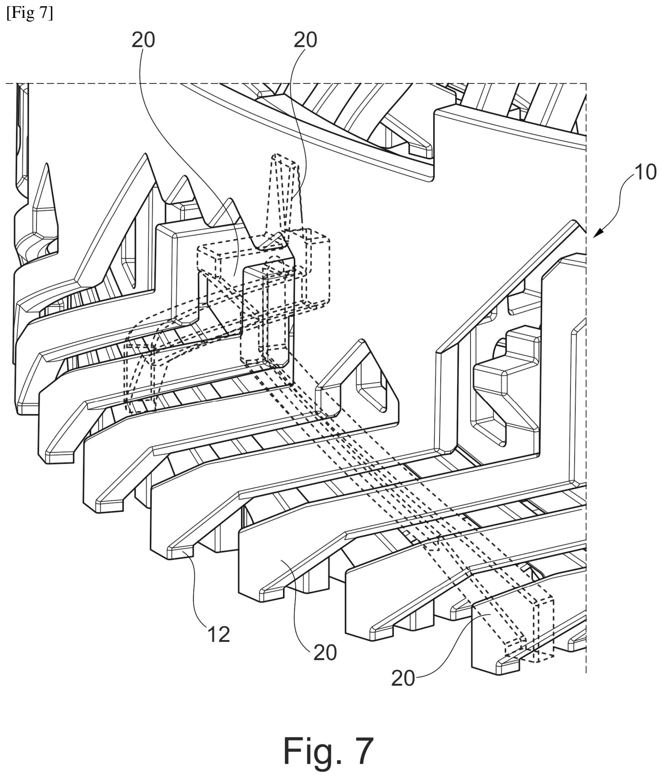

Des ailettes 20 sont également disposées du côté du stator opposé aux têtes de bobine 13, comme illustré sur les figures 6 et 7. Elles ont une forme aplatie, s'étendant selon une surface d'aplatissement circonférentielle.

Dans le mode de réalisation illustré, une jambe sur deux du bobinage 10 comporte une ailette de refroidissement 20 qui s'étend circonférentiellement en superposition sur la jambe 12 à laquelle elle est reliée, et sur une jambe adjacente, comme visible sur la figure 6. Lesdites ailettes 20 sont situées du côté extérieur du stator, à l'opposé de l'alésage central.

Additionnellement, le bobinage 10 comporte une pluralité d'ailettes de refroidissement 20 disposées chacune dans le prolongement d'une jambe 12 du bobinage 10, et ne venant en superposition que de ladite jambe 12, sans dépasser au-dessus d'une jambe adjacente, comme visible sur la figure 7.

Additionnellement, le bobinage 10 comporte encore une pluralité d'ailettes de refroidissement 20 disposées chacune dans le prolongement de plusieurs jambes 12 du bobinage 10, du côté d'un alésage central du stator, comme visible sur les figures 6 et 7.

Le bobinage 10 comporte encore, du côté du stator opposé aux têtes de bobine 13, une ailette de refroidissement 20 disposée à l'intersection d'une jambe 12 et d'une ailette de refroidissement 20 disposée dans le prolongement d'une jambe 12 du bobinage 10, comme illustré sur les figures 6 et 7. L'ailette de refroidissement 20 prend la forme d'une surépaisseur de la jambe 12 au niveau de la connexion entre la jambe 12 et l'ailette 20 disposée dans le prolongement. Cette ailette de refroidissement 20 permet d'occuper l'espace disponible par le matériau du bobinage 10, notamment du cuivre, plutôt que par du matériau d'imprégnation ou d'isolation, notamment une résine.

Ainsi, dans le mode de réalisation illustré, le bobinage 10 comporte, du côté du stator opposé aux têtes de bobine 13, des ailettes de refroidissement 20 s'étendant parallèlement les unes aux autres. Lorsque l'on se déplace radialement, on trouve d'abord du côté de l'alésage central une ailette de refroidissement 20 disposée dans le prolongement de plusieurs jambes 12. Puis, au milieu, une ailette de refroidissement 20 disposée dans le prolongement d'une jambe 12 du bobinage 10. Enfin, du côté opposé à l'alésage central, une ailette de refroidissement 20 s'étend circonférentiellement en superposition sur la jambe 12 à laquelle elle est reliée, et sur une jambe 12 adjacente.

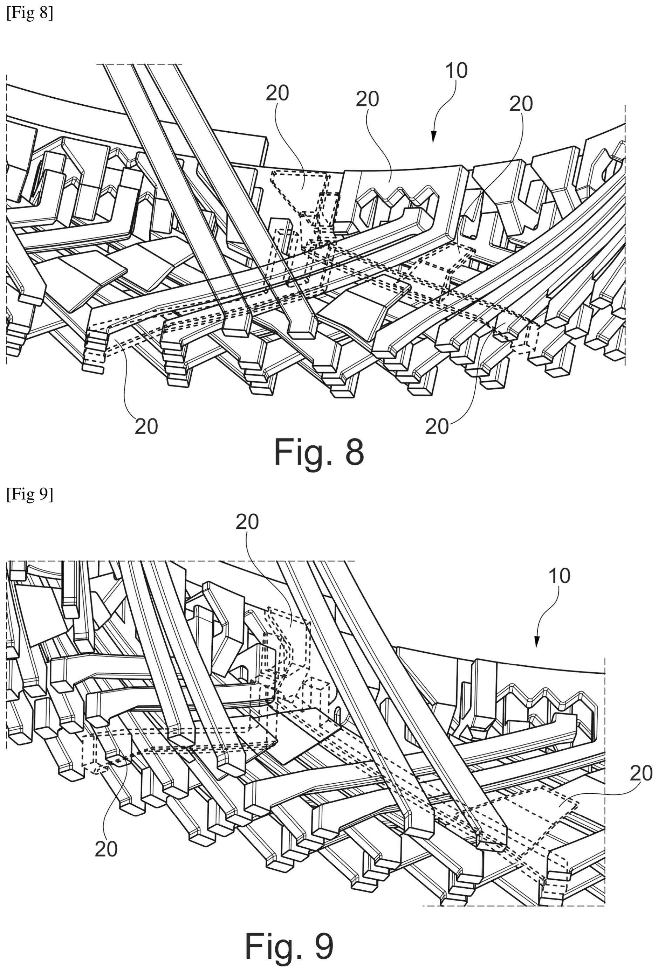

Dans une variante de réalisation, le bobinage 10 peut comporter en outre une de refroidissement 20 sur une portion oblique disposée dans la continuité d'une jambe 12 de bobinage 10, comme illustré aux figures 8 et 9. Cela peut être du côté des têtes de bobines 13 ou du côté opposé aux têtes de bobine 13. Une ailette 20 peut avoir une forme de pavé, comme illustré sur la figure 8. En variante ou additionnellement, une ailette 20 peut avoir une forme trapézoïdale, comme illustré sur les figures 8 et 9.

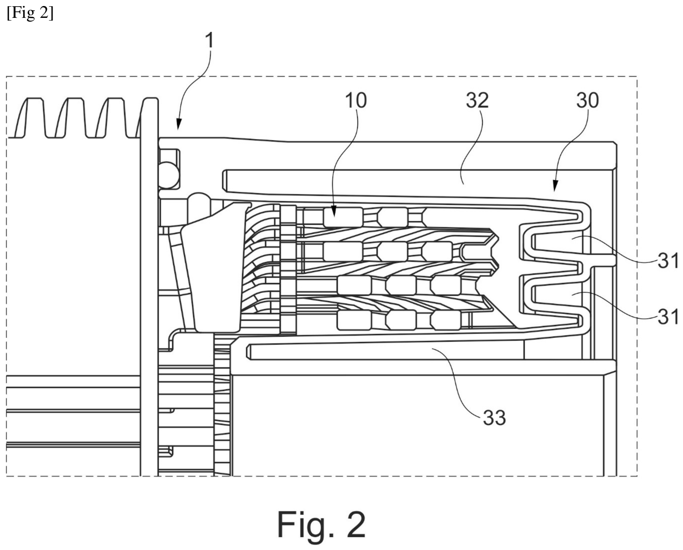

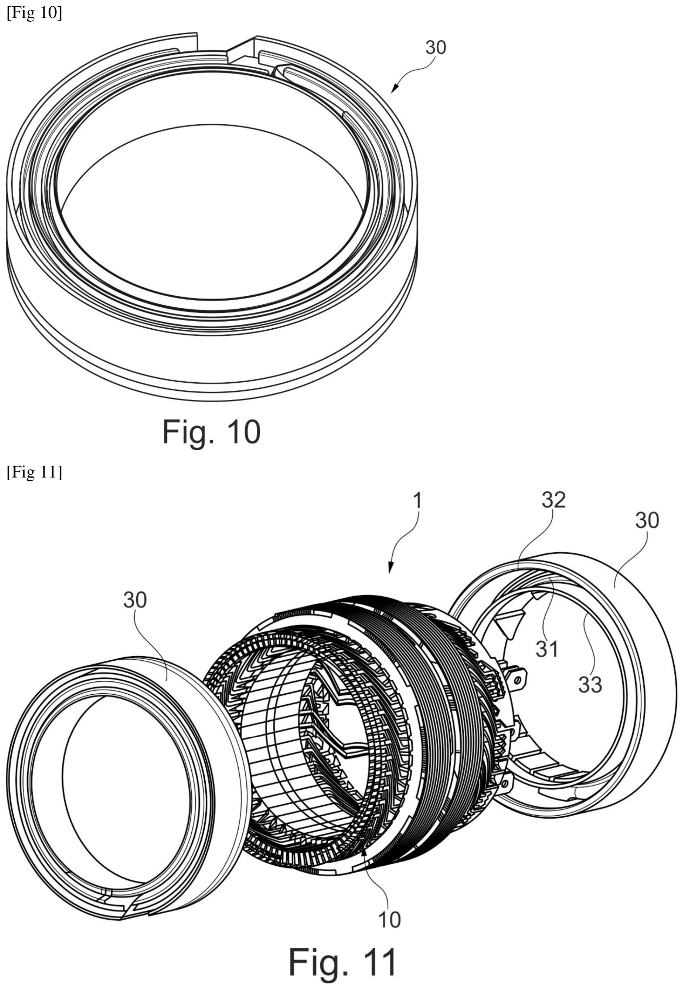

On va maintenant décrire plus en détails la coque de refroidissement 30. Celle-ci comporte une forme générale circulaire et deux portions de circulation 31 d'un fluide de refroidissement s'étendant circonférentiellement, comme illustré à la figure 2 et à la figure 10. Chaque portion de circulation 31 est ménagée par deux parois s'étendant circonférentiellement, selon une surface ayant une forme générale de cylindre ou de cône. Un axe du cylindre ou du cône est un axe de rotation de la machine. Dans l'exemple décrit, les deux parois définissant une portion de circulation 31 forment entre elles un angle, par exemple de l'ordre de 10° à 20°. Les deux parois définissant la portion de circulation 31 peuvent avoir une distance entre elles par exemple de l'ordre de 3 mm.

La coque de refroidissement 30 comporte également de part et d'autre des deux portions de circulation 31 une jupe extérieure 32 s'étendant sensiblement cylindriquement et une jupe intérieure 33 s'étendant sensiblement cylindriquement. La jupe extérieure 32 et la jupe intérieure 33 sont concentriques, comme illustré sur la figure 11.

Comme illustré sur la figure 2, les portions de circulation 31 sont destinées à venir se placer entre des ailettes de refroidissement 20, lorsque la coque de refroidissement 30 est mise en place sur le stator avec le bobinage 10. La coque de refroidissement 30 épouse alors la forme des têtes de bobines 13.

Lors du procédé de fabrication du bobinage 10, on vient d'abord fournir des conducteurs électriques 11, notamment fabriqués par fabrication additive, notamment en forme d'épingle en I ou en U. Ensuite, on vient déposer, notamment par fabrication additive, sur lesdits conducteurs électriques 11, une pluralité de têtes de bobine 13 reliant les conducteurs électriques 11, puis on vient former, notamment par fabrication additive, des ailettes de refroidissement 20 sur les têtes de bobine 13 et/ou du côté du stator opposé aux têtes de bobine 13.

Les principaux avantages de l'invention sont l'amélioration de la dissipation thermique du bobinage 10 grâce aux ailettes de refroidissement 20. La coque de refroidissement 30 permet d'assurer un bon transfert thermique et une circulation efficace du fluide de refroidissement.

## Revendications

1. Machine de traction ou de propulsion comportant un stator (1) comportant
un bobinage (10) pour stator (1) de machine électrique tournante,
le bobinage comportant une pluralité de conducteurs électriques, chaque conducteur électrique étant en forme d'épingle en I ou en U,
chaque conducteur électrique en forme d'épingle en U comportant des jambes (12) de bobinage destinées à s'étendre dans des encoches du stator et une pluralité de têtes de bobine (13), une tête de bobine (13) reliant deux jambes (12) de bobinage,
le bobinage comportant une ou plusieurs ailettes de refroidissement (20) sur au moins une tête de bobine (13) de la pluralité de têtes de bobine et/ou du côté du stator opposé aux têtes de bobine (13),
les ailettes de refroidissement (20) étant fabriquées par fabrication additive,
le stator comportant une coque de refroidissement (30) de forme générale circulaire et au moins une portion de circulation d'un fluide de refroidissement s'étendant circonférentiellement, ménagée par deux parois s'étendant circonférentiellement.

2. Machine selon la revendication précédente, les têtes de bobines (13) étant fabriquées par fabrication additive.

3. Machine selon l'une quelconque des revendications précédentes, au moins une ailette (20), voire toutes les ailettes, étant configurée pour ne pas être traversée par un courant électrique lorsqu'un courant électrique circule dans le bobinage.

4. Machine selon l'une quelconque des revendications précédentes, au moins une ailette (20) étant disposée du côté du stator (1) opposé aux têtes de bobine.

5. Machine selon l'une quelconque des revendications précédentes, au moins une ailette disposée du côté du stator opposé au têtes de bobine ayant une forme aplatie, s'étendant notamment selon une surface d'aplatissement.

6. Machine selon l'une quelconque des revendications précédentes, au moins une ailette (20) étant disposée sur le sommet d'une tête de bobine.

7. Machine selon l'une quelconque des revendications précédentes, au moins une ailette disposée sur le sommet d'une tête de bobine ayant une forme aplatie, s'étendant notamment selon une surface d'aplatissement.

8. Machine selon la revendication précédente, une tête de bobine, voire une majorité de têtes de bobines, mieux chaque tête de bobine, comportant au moins une ailette de refroidissement (20), voire deux ailettes de refroidissement, mieux trois ailettes de refroidissement.

9. Machine selon la revendication précédente, les ailettes de refroidissement (20) d'une même tête de bobine s'étendant parallèlement les uns aux autres.

10. Machine selon l'une quelconque des revendications précédentes, le bobinage comportant une ailette de refroidissement disposée à l'intersection d'une jambe (12) et d'une tête de bobine (13), notamment une surépaisseur de la jambe au niveau de la connexion entre la jambe et la tête de bobine.

11. Machine selon l'une quelconque des revendications précédentes, la coque de refroidissement comportant une jupe extérieure et une jupe intérieure, qui sont notamment concentriques, et une ou des portions de circulation d'un fluide de refroidissement s'étendant circonférentiellement, ménagées chacune par deux parois s'étendant circonférentiellement, la ou les portions de circulation s'étendant entre la jupe intérieure et la jupe extérieure.

12. Machine selon la revendication précédente, la jupe extérieure et la jupe intérieure étant concentriques.

13. Procédé de fabrication d'un bobinage d'une machine selon l'une quelconque des revendications 1 à 12, comportant les étapes suivantes :
(a) fournir des conducteurs électriques (11),
(b) déposer, notamment par fabrication additive, sur lesdits conducteurs électriques, une pluralité de têtes de bobine (13) reliant les conducteurs électriques,
en formant une ou plusieurs ailettes de refroidissement sur au moins une tête de bobine et/ou du côté du stator opposé aux têtes de bobine.
